# EUROPEAN PATENT SPECIFICATION

(11) **EP 1 742 139 B1**
(45) Date of publication and mention of the grant of the patent: **31.08.2011**
(21) Application number: 05106171.1
(22) Date of filing: 07.07.2005
(51) Int. Cl.: G06F 1/16, G08B 13/14

(54) **Carrying case for a handheld device and methods thereof**
Behälter für tragbares Gerät und Verfahren zu seiner Bedienung
Etui pour un dispositif portable et méthode de fonctionnement

(43) Date of publication of application: 10.01.2007
(60) Divisional application: 10182368.0
(73) Proprietor: RESEARCH IN MOTION LIMITED, Waterloo, Ontario N2L 3W8 (CA)
(72) Inventor: Kassiedass, Sanathan, Toront, Ontario M9L 2G2 (CA)
(74) Representative: Moore, Barry

(56) References cited:
- US-A- 5 635 959
- US-A- 5 757 271
- US-A- 6 133 830
- US-A1- 2004 070 499
- US-A1- 2004 085 209
- US-B1- 6 674 358

## Description

Small wireless communication devices, for example cellular phones, smartphones, pagers, push-to-talk devices, and the like, are becoming increasingly common. They may store private and business contact details, important data, passwords, banking information, photographs, appointments, schedules and deadlines, etc. Some of the possible implications and complications that may result from the loss of such a device include identity theft, the loss of corporate secrets, and the expense of buying a replacement.

US2004/0070499 discloses a loss prevention system that includes a portable electronic device and its retaining device. If the removal of the electronic device is unintentional as determined by the electronic device's lost device detection circuit, the user is alerted.

US6113830 discloses that several known devices may trigger an alarm when two units such as a detector unit and a transmitter unit are separated by more than a preset distance or that other known devices may trigger an alarm when a motion sensing device detects movement of the protected article.

US2004/0085209 discloses a portable apparatus that tracks an object and that an alarm is generated if a determined distance between a transmitter and a receiver exceeds a preset value.

US5635959 discloses an information-processing device equipped with a cordless pen. The device includes a pen storing portion for storing the cordless pen. However, if no cordless pen 5 is stored, a central processing unit measures a time from the last input through a keyboard input device or pen input device up to a next input. If an input is made within a predetermined time stored in advance in the main memory, or in other words, if a long time has not passed, normal operations follow. On the other hand, if no input is made after the passage of the predetermined time or a long time has passed, the display device displays a warning message that the cordless pen is not stored in place and in synchronization with this warning the speaker sounds an alarm.

US 6,674,358 discloses a holster for a telecommunication device. The holster includes a self-contained power source for driving an alert and a detector. The detector detects the presence and unseating of a telecommunication device that is insertable into the holster. The alert is coupled to the detector and is operable to alert to a user when the telecommunication device is removed from the holster. A user operable control or switch can be provided to silence or activate the alert. Alternatively, an additional sensor in the holster is used to detect activation of the device and replaces the function of the switch. Once the alert is silenced or prevented from sounding, the alert will not be sounded in the future unless the device is first returned to the holster.

A user of a handheld device may be alerted to a possible risk of losing the handheld device. The handheld device is able to be secured to a carrying case. The carrying case may alert the user by activating one or more of its user interface elements. The handheld device may determine that said handheld device is not secured to a carrying case of said handheld device and that at least a predefined or programmable amount of time has passed since a last activation of said handheld device and transmit a signal indicating this to the carrying case. The carrying case may itself make the determination. The handheld device may make the determination and may alert the user by activating one or more of its user interface elements. The handheld device and the carrying case may communicate via a wireless communication link according to a communication protocol, for example, a Bluetooth® standard, an RFID (Radio Frequency Identification) standard, a Zigbee™ standard or an ultra wideband (UWB) standard.
In a main aspect, the present invention provides a method for alerting a user of a handheld device of a possible risk of losing the handheld device, the method comprising: determining that said handheld device is not secured to a carrying case of said handheld device and that at least a predefined or programmable amount of time has passed since a last activation of said handheld device; and consequently, transmitting a signal from said handheld device to said carrying case over a wireless communication link to cause said carrying case to activate one or more of its user interface elements in order to alert said user of said risk.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

FIG. 1 is a simplified illustration of an exemplary wireless communication device and an exemplary carrying case for that wireless communication device, according to some embodiments of the invention;

FIG. 2 is a simplified block diagram of an exemplary handheld device, according to some embodiments of the invention;

FIG. 3 is a simplified block diagram of an exemplary carrying case for a handheld device, according to some embodiments of the invention;

FIG. 4 is a flowchart of an exemplary method in a handheld device for causing a carrying case of the handheld device to alert a user of the handheld device of a possible risk of losing the handheld device, according to an embodiment of the invention; and

FIG. 5 is a flowchart of an exemplary method in a carrying case for a handheld device for alerting a user of the handheld device of a possible risk of losing the handheld device, according to an embodiment of the invention.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

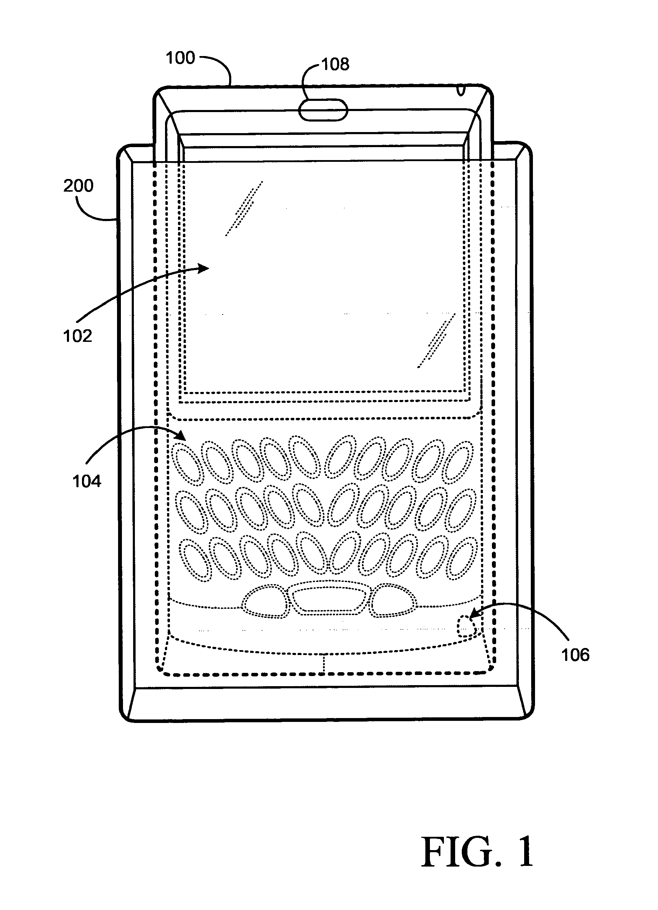

FIG. 1 is a simplified illustration of an exemplary handheld device 100 and an exemplary carrying case 200 for handheld device 100, according to some embodiments of the invention. The mechanical features of device 100 and carrying case 200, as shown in FIG. 1, are exemplary, and handheld devices and carrying cases having different mechanical features are also contemplated. For example, device 100 is shown inserted into carrying case 200; however, other means for securing a handheld device and a carrying case are also contemplated.

In this example, device 100 includes a display 102 and a keyboard 104. Keyboard 104 may be embedded in full or in part within display 102, i.e. display 102 may be a "touch screen". In this example, device 100 also includes an audio input element 106, for example a microphone, and an audio output element 108, for example a speaker. However, embodiments of this invention are equally applicable to handheld devices not having one or more of a display, a keyboard, an audio input element and an audio output element. Device 100 may include other user interface elements that are not shown for clarity.

A user may secure carrying case 200 to a personal item worn on the body, for example a belt or other clothing item, or may store carrying case 200 inside a personal item carried by the user, for example a bag, knapsack or purse. A user may secure device 100 to carrying case 200 and may remove device 100 from carrying case 200 from time to time in order to operate device 100 or for any other reason. The user might forget to secure device 100 to carrying case 200 afterward, and as a result, it is possible that the user might lose device 100, for example, by leaving it behind when the user moves to another place.

According to some embodiments of the invention, if one or more conditions are met, carrying case 200 and/or device 100 may be triggered to alert the user of a possible risk of losing device 100. The one or more conditions may be predefined or programmable. Carrying case 200 may alert the user by activating one or more user interface elements included in carrying case 200. Similarly, device 100 may alert the user by activating one or more user interface elements included in device 100. A non-exhaustive list of examples for such user interface elements includes a vibrator, a sound source, a light source, and any other suitable user interface element.

The following is a non-exhaustive list of examples for conditions that may trigger carrying case 200 and/or device 100 to alert the user.
(1) Handheld device 100 is not secured to carrying case 200, and its distance from carrying case 200 is more than a predefined or programmable distance. As shown hereinbelow, handheld device 100 and carrying case 200 may include means to communicate with one another. A communication link may be established between handheld device 100 and carrying case 200, for example, immediately after handheld device 100 is removed from carrying case 100.

According to some exemplary embodiments of the invention, if handheld device 100 becomes out of range of carrying case 200, carrying case 200 may be triggered to alert the user. According to some other exemplary embodiments of the invention, carrying case 200 may be able to measure the strength of signals originating from handheld 100 and to determine according to those measurements whether to alert the user or not.

According to some other exemplary embodiments of the invention, handheld device 100 may be able to measure the strength of signals originating from carrying case 200 and to determine according to those measurements whether to alert the user or not. If handheld device 100 concludes the user should be alerted, handheld device 100 may be triggered to alert the user and/or may trigger carrying case 200 to alert the user by transmitting an appropriate signal to carrying case 200 over a wireless communication link. One exemplary measurement that can be used in handheld device 100 and/or carrying case 200 for measuring the strength of signals is known as RSSI (Received Signal Strength Indication).
(2) Handheld device 100 is not secured to carrying case 200 and at least a predefined or programmable amount of time has passed since handheld device 100 was last removed from carrying case 200. According to some exemplary embodiments of the invention, carrying case 200 may include a timer implemented in hardware, software or a combination thereof. The timer may count time from the moment handheld device 100 is removed from carrying case 200 and may trigger carrying case 200 to alert the user if a predefined or programmable amount of time has passed. Carrying case 200 may reset the timer once handheld device 100 is returned to carrying case 200.

According to some other exemplary embodiments of the invention, handheld device 100 may include a timer implemented in hardware, software or a combination thereof. The timer may count time from the moment handheld device 100 is removed from carrying case 200, and if a predefined or programmable amount of time has passed, handheld device 100 may be triggered to alert the user and/or may trigger carrying case 200 to alert the user by transmitting an appropriate signal to carrying case 200 over a wireless communication link. Handheld device 100 may reset the timer once handheld device 100 is returned to carrying case 200.
(3) Handheld device 100 is not secured to carrying case 200 and at least a predefined or programmable amount of time has passed since handheld device 100 was last removed from carrying case 200 without the user activating handheld device 100. According to some exemplary embodiments of the invention, handheld device 100 may include a timer implemented in hardware, software or a combination thereof. The timer may count time from the moment handheld device 100 is removed from carrying case 200 and may terminate the counting if the user activates handheld device 100. Handheld device 100 may stop and/or reset the timer once the user activates handheld device 100 or returns handheld device 100 to carrying case 200.

For example, the user may activate handheld device 100 by pressing a key of keyboard 104, by activating any other electro-mechanical switch included in handheld device 100, or by actively participating in a communication session involving handheld device 100. If a predefined or programmable amount of time passes without a user activating handheld device 100, handheld device 100 may be triggered to alert the user and/or may trigger carrying case 200 to alert the user by transmitting an appropriate signal to carrying case 200.

The following is a condition that may trigger the carrying case 200 and/or device 100 to alert the user according to the invention.

Handheld device 100 is not secured to carrying case 200 and at least a predefined or programmable amount of time has passed since the last activation of handheld device 100 without the user re-activating handheld device 100. According to the invention, handheld device 100 may include a timer implemented in hardware, software or a combination thereof. The timer may start (or re-start) counting time at activations of handheld device 100. A non-exhaustive list of examples for activation of handheld device 100 includes termination of a communication session involving handheld device 100, activation of a key or another electro-mechanical element included in handheld device 100, and any other suitable activation of handheld device 100.

The counting may be terminated and re-started if another activation of handheld device 100 occurs. If a predefined or programmable amount of time has passed since the most recent activation of handheld device 100, handheld device 100 may be triggered to alert the user and/or may trigger carrying case 200 to alert the user by transmitting an appropriate signal to carrying case 200.

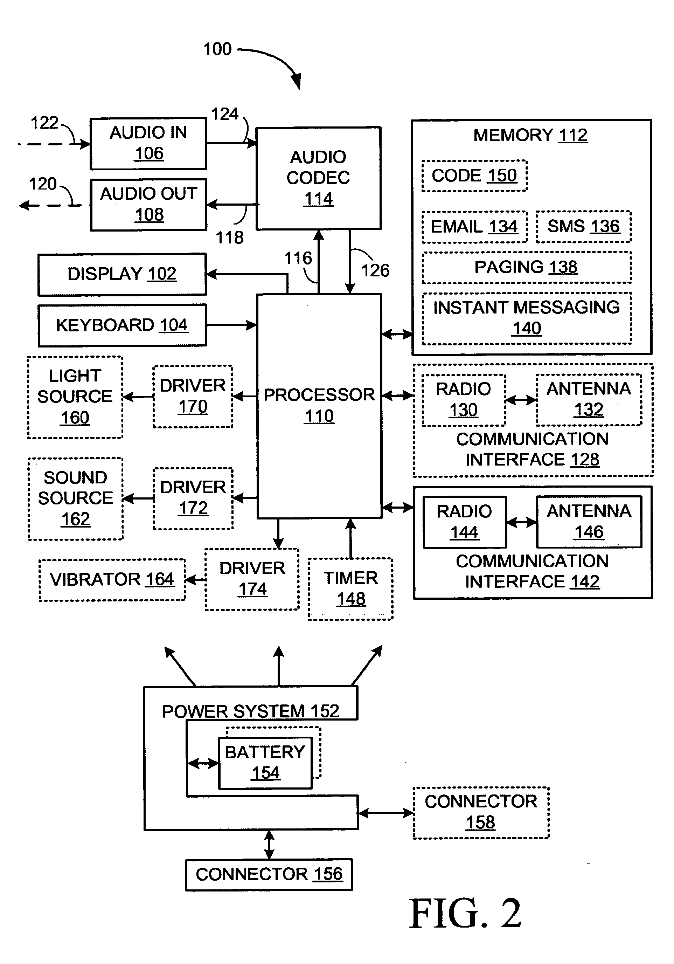

FIG. 2 is a simplified block diagram of exemplary handheld device 100, according to some embodiments of the invention. Handheld device 100 includes a processor 110 and a memory 112. Memory 112, keyboard 104 and display 102 are coupled to processor 110. Handheld device 100 includes an audio coder-decoder (codec) 114 coupled to audio input element 106, audio output element 108 and processor 110.

Codec 114 may be able to receive a digital representation 116 of sound waves from processor 110 and to output a corresponding analog signal 118 to audio output device 108. Audio output device 108 may be able to receive analog signal 118 and to output sound waves 120 corresponding to analog signal 118. In addition, audio input element 106 may be able to receive sound waves 122 and to output a corresponding analog signal 124 to codec 114. Codec 114 may be able to receive analog signal 124 and to output a digital representation 126 of analog signal 124 to processor 110.

Handheld device 100 may optionally include a wireless communication interface 128, compatible with a wireless communication protocol, coupled to processor 110 and including at least a radio 130 and an antenna 132. By way of wireless communication interface 128 and a communication infrastructure (not shown) that is external to handheld device 100, handheld device 100 may be able to establish communication sessions with other devices (not shown).

Alternatively, a communication device (not shown) belonging to a different user may initiate a communication session to handheld device 100. Handheld device 100 may receive a notification about the initiated communication session from a communication infrastructure (not shown) that is external to handheld device 100. Handheld device 100 may notify its user about the incoming communication session, and the user may or may not receive the telephone communication session.

A non-exhaustive list of examples for communication sessions includes telephone communication sessions, sending and receiving electronic mail (Email), sending and receiving instant messages, sending and receiving paging messages, sending and receiving short message service (SMS) messages, and any other suitable communication sessions.

For types of communication sessions supported by handheld device 100, memory 112 may store respective software modules to be executed by processor 110, for example, an Email software module 134, an SMS software module 136, a paging software module 138 and an instant messaging software module 140.

Handheld device 100 includes a secondary communication interface 142, compatible with a wireless communication protocol that is different from the wireless communication protocol that communication interface 128 is compatible with. Communication interface 142 may be coupled to processor 110 and may include at least a radio 144 and an antenna 146.

For example, handheld device 100 may be "Bluetooth®-enabled", and communication interface 142 may comply with Bluetooth® core specifications v1.1, published February 22, 2001 by the Bluetooth® special interest group (SIG) and/or with Bluetooth® core specifications v1.2, published November 5, 2003. However, it will be obvious to those of ordinary skill in the art how to modify the following for other existing Bluetooth® standards or future related standards. Alternatively, communication interface 142 may comply with any other suitable protocol, for example Zigbee™, RFID (Radio Frequency Identification), ultra wideband (UWB), or a proprietary communication protocol.

By way of communication interface 142, handheld device 100 may be able to communicate with other devices that comply with the same protocol as communication interface 142. For example, handheld device 100 may communicate with carrying case 200 by way of communication interface 142.

Handheld device 100 may optionally include a timer 148 that is implemented in hardware, software, or a combination thereof. Memory 112 may optionally include code 150 that, when executed by processor 110, determines whether any of the trigger conditions have been met. In addition, code 150 may be able to control timer 148.

Handheld device 100 includes a power system 152, one or more batteries 154, and a connector 156, both coupled to power system 152. Connector 156 can be connected to an external power source (not shown) that can provide power for charging batteries 154 and/or for operating handheld device 100. Power system 152 provides electrical coupling between the external power source and batteries 154, and provides electrical coupling between batteries 154 and the electrical components of handheld device 100 (i.e. processor 110, memory 112, and the like). As part of the electrical coupling between the external power source and battery 154, power system 152 may control the charging of batteries 154 with electrical charge drawn from the external power source.

A non-exhaustive list of examples for batteries 154 includes Ni-Cd (Nickel Cadmium) batteries, Ni-MH (Nickel-Metal Hydride) batteries, Lithium Ion batteries, rechargeable Alkaline batteries, and any other suitable batteries.

Handheld device 100 may optionally include a connector 158 coupled to power system 152 to provide power to carrying case 200, as described hereinbelow.

In addition to display 102, keyboard 104, audio input element 106 and audio output element 108, handheld device 100 may includes one or more additional user interface elements, for example, a light source 160, a sound source 162 and a vibrator 164, and may include respective electrical drivers 170, 172 and 174. Light source 160 may be, for example a LED (Light Emitting Diode) or a lamp. Sound source 162 may be, for example, a speaker or a buzzer. Vibrator 164 may be, for example, an eccentric vibrator motor. By way of drivers 170, 172 and 174, processor 110 may be able to activate light source 160 and/or sound source 162 and/or vibrator 164, respectively, to alert a user if any of the trigger conditions are met. Audio output element 108 may be used instead of sound source 162 to alert the user if any of the trigger conditions are met.

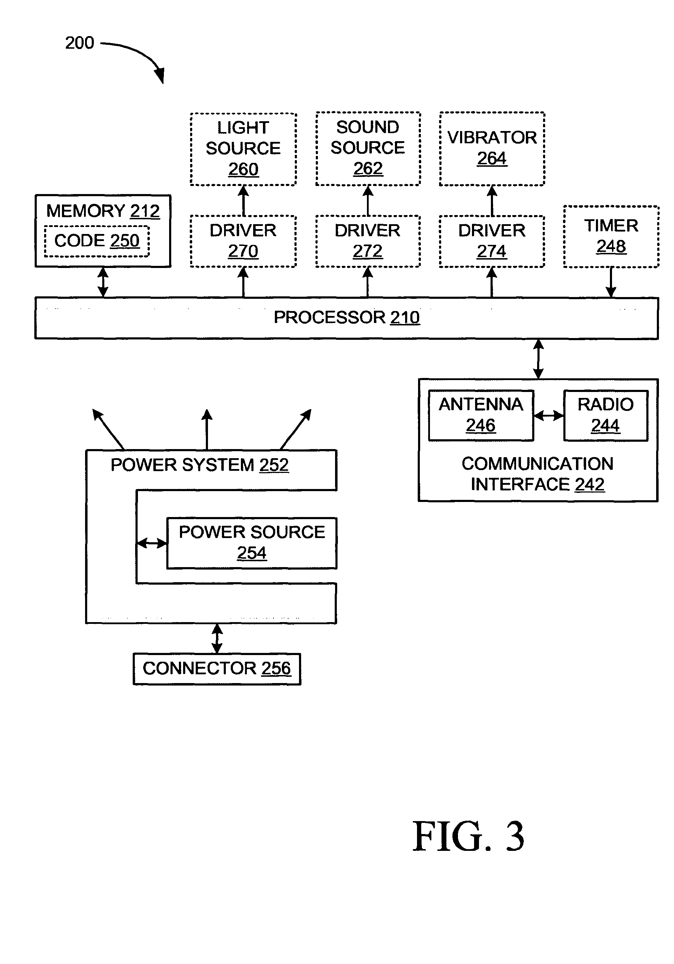

FIG. 3 is a simplified block diagram of exemplary carrying case 200, according to some embodiments of the invention. Carrying case 200 includes a processor 210 and a memory 212 coupled to processor 210. Carrying case 200 includes a wireless communication interface 242, compatible with the same wireless communication protocol as wireless communication interface 142 of handheld device 100. Wireless communication interface 242 may be coupled to processor 210 and may include at least a radio 244 and an antenna 246. By way of communication interface 242, carrying case 200 may be able to communicate with other devices that comply with the same protocol as communication interface 242. For example, carrying case 200 may communicate with handheld device 100 by way of communication interface 242.

Carrying case 200 includes one or more user interface elements, for example, a light source 260, a sound source 262 and a vibrator 264, and may include respective electrical drivers 270, 272 and 274. Light source 260 may be, for example a LED (Light Emitting Diode) or a lamp. Sound source 262 may be, for example, a speaker or a buzzer. Vibrator 264 may be, for example, an eccentric vibrator motor. By way of drivers 270, 272 and 274, processor 210 may be able to activate light source 260 and/or sound source 262 and/or vibrator 264, respectively, to alert a user if any of the trigger conditions are met.

Carrying case 200 may optionally include a timer 248 that is implemented in hardware, software, or a combination thereof. Memory 212 may optionally include code 250 that, when executed by processor 210, determine whether any of the trigger conditions have been met. In addition, code 150 of handheld device 100 may be able to control timer 250.

Carrying case 200 includes a power system 252, a power source 254, and a connector 256, both coupled to power system 252. Connector 256 can be connected to an external power source, that may be, for example, connector 158 of handheld device 100, that can provide power for charging power source 254.

Power system 252 provides electrical coupling between the external power source and power source 254, and provides electrical coupling between power source 254 and the electrical components of carrying case 200 (i.e. processor 210, memory 212, and the like). As part of the electrical coupling between the external power source and power source 254, power system 252 may control the charging of power source 254 with electrical charge drawn from the external power source.

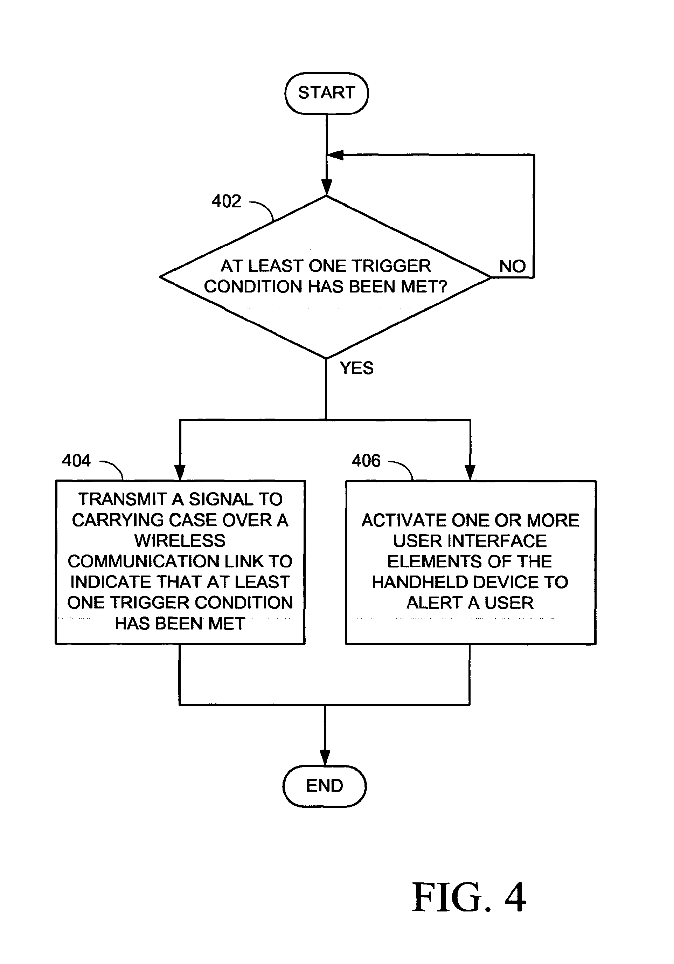

FIG. 4 is a flowchart of an exemplary method in handheld device 100 for causing carrying case 200 to alert a user of handheld device 100 of a possible risk of losing handheld device 100, according to an embodiment of the invention. Handheld device 100 may check whether at least one trigger condition has been met (402), and if at least one trigger condition has been met, handheld device 100 may transmit a signal to carrying case 200 to indicate that at least one trigger condition has been met (404) and/or may activate one or more user interface elements of handheld device 100 in order to alert the user (406). Various situations in which handheld device 100 may determine that one or more trigger conditions have been met are described hereinabove.

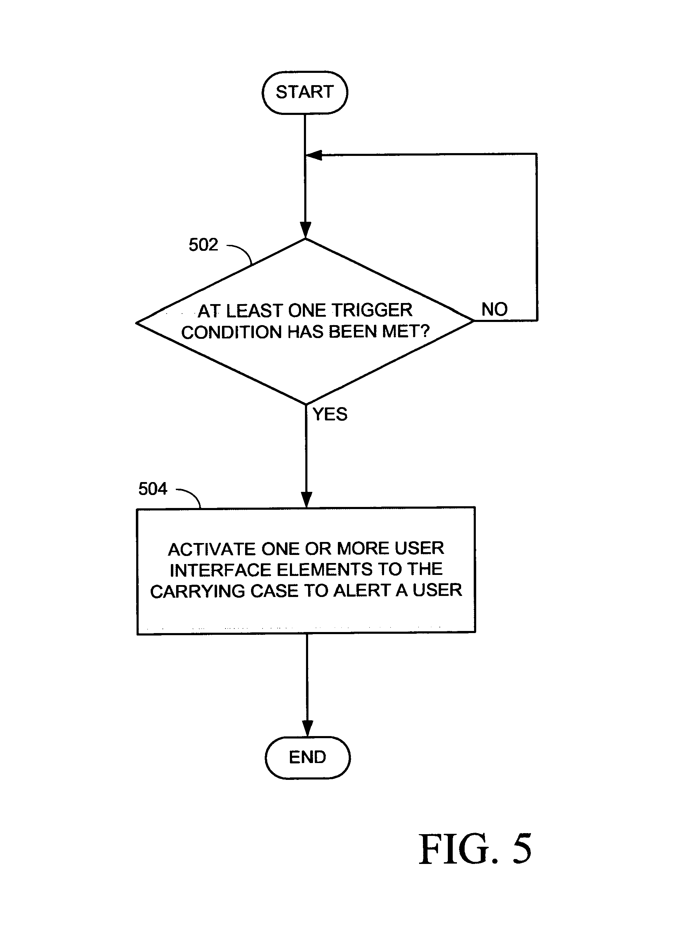

FIG. 5 is a flowchart of an exemplary method in carrying case 200 to alert a user of handheld device 100 of a possible risk of losing handheld device 100, according to an embodiment of the invention. Carrying case 200 may check whether at least one trigger condition has been met (502), and if at least one trigger condition has been met, carrying case 200 may activate one or more user interface elements of carrying case 200 in order to alert the user (504). As explained hereinabove, carrying case 200 may receive a signal from handheld device 100 indicating that a trigger condition has been met. Various situations in which carrying case may determine that one or more trigger conditions have been met are described hereinabove.

A non-exhaustive list of examples for power source 254 includes one or more Ni-Cd batteries, one or more Ni-MH batteries, one or more Lithium Ion batteries, one or more rechargeable Alkaline batteries, one or more capacitors, one or more super-capacitors, and any other suitable power source.

A non-exhaustive list of examples for handheld device 100 includes a cellular phone, a smart phone, a pager, a push-to-talk device, a personal digital assistant (PDA), an MP3 (Moving Picture Experts Group Layer-3 Audio) player, an electronic mail (Email) client, a gaming device, a wireless terminal, and any other suitable small wireless-enabled electronic device.

A non-exhaustive list of examples for standards with which wireless communication interface 128 may comply includes Direct Sequence - Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication.

Alternatively, handheld device 100 may be "802.11-enabled", and wireless communication interface 128 may comply with one or more of the following standards defined by the Institute of Electrical and Electronic Engineers (IEEE) for Wireless LAN MAC and Physical layer (PHY) specifications:

| Standard | Published | Maximum Speed | Frequency | Modulation |
|---|---|---|---|---|
| 802.11 | 1997 | 2 Mbps | 2.4 GHz | Phase-Shift |
| 802.11a | 1999 | 54 Mbps | 5.0 GHz | Orthogonal Frequency |
| | | | | Division Multiplexing |
| 802.11b | 1999 | 11 Mbps | 2.4 GHz | Complementary Code Keying |
| 802.11g | 2003 | 54 Mbps | 2.4 GHz | Orthogonal Frequency |
| | | | | Division Multiplexing |

However, it will be obvious to those of ordinary skill in the art how to modify the following for other existing WLAN standards or future related standards, including 802.11n.

A non-exhaustive list of examples for processors 110 and 210 includes microprocessors, microcontrollers, central processing units (CPU), digital signal processors (DSP), reduced instruction set computers (RISC), complex instruction set computers (CISC) and the like. Furthermore, any of processors 110 and 210 may comprise more than one processing unit, may be part of an application specific integrated circuit (ASIC) or may be a part of an application specific standard product (ASSP).

A non-exhaustive list of examples for memories 112 and 212 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like;
   and
c) magnetic devices, such as a hard disk, a floppy disk, a magnetic tape, and the like.

A non-exhaustive list of examples for antennae 132, 146 and 246 includes dipole antennae, monopole antennae, multilayer ceramic antennae, planar inverted-F antennae, loop antennae, shot antennae, dual antennae, omnidirectional antennae and any other suitable antennae.

While certain features of the invention have been illustrated and described herein, many modifications, substitutions, changes, and equivalents will now occur to those of ordinary skill in the art. It is, therefore, to be understood that the appended claims are intended to cover all such modifications and changes.

## Claims

1. A method for alerting a user of a handheld device (100) of a possible risk of losing the handheld device (100), the method comprising:
determining that said handheld device (100) is not secured to a carrying case (200) of said handheld device (100) and that at least a predefined or programmable amount of time has passed since a last activation of said handheld device (100); and
consequently, transmitting a signal from said handheld device (100) to said carrying case (200) over a wireless communication link to cause said carrying case (200) to activate one or more of its user interface elements (260, 262, 264) in order to alert said user of said risk.

2. The method of claim 1, wherein determining that at least said predefined or programmable amount of time has passed since said last activation of said handheld device (100) comprises:
determining that no electro-mechanical switch (104) comprised in said handheld device (100) has been activated for at least said predefined or programmable amount of time since said last activation, and/or
determining that said user has not participated in any communication session using said handheld device (100) for at least said predefined or programmable amount of time since said last activation.

3. A handheld device (100) comprising:
a wireless communication interface (142) through which said handheld device (100) is able to communicate with a carrying case (200);
means for determining whether said handheld device (100) is secured to said carrying case (200);
a processor (110);
a memory (112);
a power source (154) to provide power to said processor (110), said memory (112) and said communication interface (142); and
means for determining whether at least a predefined or programmable amount of time has passed since a last activation of said handheld device (100), which signifies, in conjunction with said handheld device (100) not being secured to said carrying case (200), that there is a possible risk of a user losing said handheld device (100),
wherein said memory (112) is arranged to store executable code means (150) that, when executed by said processor (110), is arranged to control said wireless communication interface (142) to transmit a signal to said carrying case (200) to cause said carrying case (200) to alert a user of said handheld device (100) to said risk.

4. The handheld device (100) of claim 3, further comprising:
a connector (158) coupled to said power source (154) to provide power to said carrying case (200) while said handheld device (100) is secured to said carrying case (200).

5. The handheld device (100) of claim 3 or claim 4, wherein said wireless communication interface (154) is Bluetooth® standard compatible and/or RFID (Radio Frequency Identification) standard compatible and/or ZigBee™ standard compatible and/or ultra wideband (UWB) standard compatible.

6. A computer program product for a handheld device (100) to cause a carrying case (200) of the handheld device (100) to alert a user of the handheld device (100) of a possible risk of losing the handheld device (100), the computer program product comprising a computer readable medium (112) embodying program code means (150) executable by a processor (110) of the handheld device (100) for implementing the method of claim 1 or claim 2.

7. A wireless communication system comprising a handheld device (100) according to any one of claims 3 to 5 and having associated therewith a carrying case comprising a wireless communication interface (242) through which said carrying case can receive signaling from said handheld device (100) and one or more user interface elements (260, 262, 264) that can be activated to alert a user of said handheld device (100).

## Patentansprüche

1. Verfahren zum Warnen eines Benutzers einer Handvorrichtung (100) vor einem möglichen Risiko des Verlierens der Handvorrichtung (100), wobei das Verfahren Folgendes aufweist.
Bestimmen, dass die Handvorrichtung (100) nicht an einem Tragebehälter (200) der Handvorrichtung (100) gesichert ist und dass mindestens eine vorbestimmte oder programmierbare Zeitmenge seit einer letzten Aktivierung der Handvorrichtung (100) verstrichen ist, und
darauffolgendes Übermitteln eines Signals von der Handvorrichtung (100) an den Tragebehälter (200) über eine drahtlose Kommunikationsverbindung, um zu veranlassen, dass der Tragebehälter (200) ein oder mehrere Benutzerschnittstellenelemente (260, 262, 264) aktiviert, um den Benutzer vor dem Risiko zu warnen.

2. Verfahren nach Anspruch 1, wobei Bestimmen, dass mindestens die vorbestimmte oder programmierbare Zeitmenge seit der letzten Aktivierung der Handvorrichtung (100) verstrichen ist, Folgendes aufweist:
Bestimmen, dass kein elektro-mechanischer Schalter (104), der in der Handvorrichtung (100) vorgesehen ist, für mindestens die vorbestimmte oder programmierbare Zeitmenge seit der letzten Aktivierung aktiviert worden ist, und/oder
Bestimmen, dass der Benutzer an keiner Kommunikationssitzung unter Verwendung der Handvorrichtung (100) für mindestens die vorbestimmte oder programmierbare Zeitmenge seit der letzten Aktivierung teilgenommen hat.

3. Handvorrichtung (100) mit:
einer Drahtloskommunikationsschnittstelle (142), durch welche die Handvorrichtung (100) fähig ist, mit einem Tragebehälter (200) zu kommunizieren,
einer Einrichtung zum Bestimmen, ob die Handvorrichtung (100) an dem Tragebehälter (200) gesichert ist,
einem Prozessor (110),
einem Speicher (112),
einer Leistungsquelle (154), um Leistung an den Prozessor (110), den Speicher (112) und die Kommunikationsschnittstelle (142) zu liefern, und
einer Einrichtung zum Bestimmen, ob mindestens eine vorbestimmte oder programmierbare Zeitmenge seit einer letzten Aktivierung der Handvorrichtung (100) verstrichen ist, was in Verbindung mit dem Nicht-an-die-Tragevorrichtung(200)-gesichert-Sein der Handvorrichtung (100) bedeutet, dass ein mögliches Risiko, dass der Benutzer die Handvorrichtung (100) verliert, besteht,
wobei der Speicher (112) dazu ausgelegt ist, ausführbare Codemittel (150) zu speichern, die, wenn sie von dem Prozessor (110) ausgeführt werden, dazu ausgelegt sind, zu steuern, dass die Drahtloskommunikationsschnittstelle (142) ein Signal an den Tragebehälter (200) übermittelt, um zu veranlassen, dass der Tragebehälter (200) den Benutzer der Handvorrichtung (100) über das Risiko warnt.

4. Handvorrichtung (100) nach Anspruch 3, ferner mit:
einem Verbindungsteil (158), das mit der Leistungsquelle (154) gekoppelt ist, um Leistung an den Tragebehälter (200) zu liefern, während die Handvorrichtung (100) an dem Tragebehälter (200) gesichert ist.

5. Handvorrichtung (100) nach Anspruch 3 oder 4, wobei die Drahtloskommunikationsschnittstelle (154) mit Bluethooth®-Standard kompatibel und/oder mit RFID(Radio Frequency Identification)-Standard kompatibel und/oder mit ZigBee™-Standard kompatibel und/oder mit Ultrabreitbandstandard (Ultra wideband, UWB) kompatibel ist.

6. Computerprogrammprodukt für eine Handvorrichtung (100), um zu veranlassen, dass ein Tragebehälter (200) der Handvorrichtung (100) einen Benutzer der Handvorrichtung (100) vor einem möglichen Risiko des Verlierens der Handvorrichtung (100) warnt, wobei das Computerprogrammprodukt ein computerlesbares Medium (112) aufweist, das Programmcodemittel (150) verkörpert, die von einem Prozessor (110) der Handvorrichtung (100) zur Durchführung des Verfahrens nach Anspruch 1 oder 2 ausführbar sind.

7. Drahtloskommunikationssystem mit einer Handvorrichtung (100) nach einem der Ansprüche 3 bis 5, das damit einen Tragebehälter assoziiert hat, der eine Drahtloskommunikationsschnittstelle (242) aufweist, durch die der Tragebehälter Signale von der Handvorrichtung (100) und einem oder mehreren Benutzerschnittstellenelementen (260, 262, 264) empfangen kann, die aktiviert werden können, um den Benutzer der Handvorrichtung (100) zu warnen.

## Revendications

1. Procédé destiné à alerter un utilisateur d'un dispositif portable (100) du risque possible de perte du dispositif portable (100), le procédé comprenant le fait :
de déterminer que ledit dispositif portable (100) n'est pas attaché à un étui de transport (200) dudit dispositif portable (100) et qu'au moins une durée prédéfinie ou programmable s'est écoulée depuis une dernière activation dudit dispositif portable (100) ; et
de transmettre par conséquent, un signal dudit dispositif portable (100) audit étui de transport (200) à travers une liaison de communication sans fil pour amener ledit étui de transport (200) à activer un ou plusieurs de ses éléments (260, 262, 264) d'interface utilisateur afin d'alerter ledit utilisateur dudit risque.

2. Procédé de la revendication 1, dans lequel la détermination que ladite au moins une durée prédéfinie ou programmable s'est écoulée depuis ladite dernière activation dudit dispositif portable (100) comprend le fait de :
déterminer qu'aucun commutateur électromécanique (104) compris dans ledit dispositif portable (100) n'a été activé pendant ladite au moins une durée prédéfinie ou programmable depuis ladite dernière activation, et/ou
déterminer que ledit utilisateur n'a participé à aucune session de communication en utilisant ledit dispositif portable (100) pour ladite au moins une durée prédéfinie ou programmable depuis ladite dernière activation.

3. Dispositif portable (100) comprenant:
une interface de communication sans fil (142) à travers laquelle ledit dispositif portable (100) est capable de communiquer avec un étui de transport (200) ;
un moyen pour déterminer si ledit dispositif portable (100) est attaché audit étui de transport (200) ;
un processeur (110) ;
une mémoire (112) ;
une source d'alimentation (154) pour alimenter en puissance ledit processeur (110), ladite mémoire (112) et ladite interface de communication (142) ; et
un moyen pour déterminer si l'au moins une période prédéfinie ou programmable s'est écoulée depuis une dernière activation dudit dispositif portable (100), ce qui signifie, en relation avec le fait que ledit dispositif portable (100) n'est pas attaché audit étui de transport (200), qu'il y a un risque possible que l'utilisateur perde ledit dispositif portable (100),
dans lequel ladite mémoire (112) est agencée pour stocker un moyen de code (150) exécutable qui, lorsqu'il est exécuté par ledit processeur (110), est agencé pour commander ladite interface de communication sans fil (142) pour transmettre un signal audit étui de transport (200) afin d'amener ledit étui de transport (200) à alerter un utilisateur dudit dispositif portable (100) dudit risque.

4. Dispositif portable (100) de la revendication 3, comprenant en outre:
un connecteur (158) couplé à ladite source d'alimentation (154) pour alimenter en puissance ledit étui de transport (200) lorsque ledit dispositif portable (100) est attaché audit étui de transport (200).

5. Dispositif portable (100) de la revendication 3 ou la revendication 4, dans lequel ladite interface de communication sans fil (154) est compatible avec la norme Bluetooth® et/ou compatible avec la norme RFID (Identification par Radiofréquence) et/ou compatible avec la norme ZigBee™ et/ou compatible avec la norme bande ultralarge (UWB).

6. Produit de programme d'ordinateur pour un dispositif portable (100) pour amener un étui de transport (200) du dispositif portable (100) à alerter un utilisateur du dispositif portable (200) d'un risque possible de perte du dispositif portable (100), le produit de programme d'ordinateur comprenant un support lisible par ordinateur (112) incorporant un moyen de code (150) de programme exécutable par un processeur (110) du dispositif portable (100) afin de mettre en oeuvre le procédé des revendications 1 ou 2.

7. Système de communication sans fil comprenant un dispositif portable (100) selon l'une quelconque des revendications 3 à 5 et auquel est associé un étui de transport comprenant une interface de communication sans fil (242) par laquelle ledit étui de transport peut recevoir des signaux à partir dudit dispositif portable (100) et un ou plusieurs éléments d'interface utilisateur (260, 262, 264) qui peuvent être activés afin d'alerter un utilisateur dudit dispositif portable (100).
